# EUROPÄISCHE PATENTSCHRIFT

(11) **EP 0 522 575 B1**
(45) Veröffentlichungstag und Bekanntmachung des Hinweises auf die Patenterteilung: **15.03.1995**
(21) Anmeldenummer: 92111762.8
(22) Anmeldetag: 10.07.1992
(51) Int. Cl.: C01G 29/00, C04B 35/00

(54) **Verfahren zur Herstellung eines Hochtemperatursupraleiters**
Process for the preparation of a high temperature superconductor
Procédé pour la préparation d'un supraconducteur de haute température

(30) Priorität: 11.07.1991 DE 4122893
(43) Veröffentlichungstag der Anmeldung: 13.01.1993
(73) Patentinhaber: HOECHST AKTIENGESELLSCHAFT, 65926 Frankfurt am Main (DE)
(72) Erfinder: Lang, Christoph, Dr., W-6230 Frankfurt/Main 80 (DE); Becker, Winfried, Dr., W-6239 Bremtal (DE); Budesheim, Carsten, W-6230 Frankfurt/Main 80 (DE)

(56) Entgegenhaltungen:
- PATENT ABSTRACTS OF JAPAN & JP-A-11 97 352
- PATENT ABSTRACTS OF JAPAN & JP-A-10 79 060
- MATERIALS LETTERS Bd. 8, Nr. 6/7, Juli 1989, AMSTERDAM NL Seiten 228 - 232 F.H.CHEN
- JOURNAL OF MATERIALS SCIENCE Bd. 25, Nr. 7, Juli 1990, LONDON GB Seiten 3338-3346 F.H.CHEN

## Beschreibung

Die Erfindung betrifft ein Verfahren zur Herstellung eines Hochtemperatursupraleiters, der die Elemente Wismut, Kupfer, Strontium und Kalzium enthält, bei dem die Metalle als Oxalatgemisch ausgefällt werden, das danach zunächst zu einem feinkörnigen, oxidischen Vorprodukt hoher Reaktivität und dann zu einem Supraleiter weiterverarbeitet wird.

In der Familie der Supraleiterkeramiken, die aus den Elementen Wismut, Strontium, Kalzium und Kupfer gebildet werden, sind im wesentlichen drei Vertreter bekannt und hinreichend untersucht worden. Dabei handelt es sich um Bi₂Sr₂Ca₂Cu₃Oₓ, bekannt als "3-Schichtverbindung", mit einer Sprungtemperatur von 110K (H. Maeda et al. Japan. J. Appl. Phys. 27 (1988) L209), um die Verbindung Bi₂Sr₂CaCu₂O_{10-δ} ("2-Schichtverbindung") mit einer Sprungtemperatur von 92K (vgl. M. A. Subramaniam et al., Science 239, 1988, Seite 1015) und um die Verbindung Bi₂Sr₂CuO_{8-δ} ("1-Schichtverbindung") mit einer Sprungtemperatur um 10K (vgl. R. M. Fleming et al., Physica C 172 (1990) 13).

Für Anwendungen oberhalb der Temperatur des flüssigen Stickstoffs kommen zum jetzigen Zeitpunkt aus dieser Strukturfamilie nur die beiden erstgenannten Verbindungen in Frage. Eine andere technisch relevante supraleitende Verbindung mit einer Sprungtemperatur oberhalb 77K ist YBa₂Cu₃O₇₋ₓ (92K).

Die eigentliche Synthese des Supraleiters erfolgt durch Festkörperreaktion bei hohen Temperaturen aus den Oxiden. Entscheidend für die Herstellung der Supraleiter ist dabei die mittlere Korngröße der eingesetzten Vorprodukte. Ein durch Glühen eines Gemenges von Metalloxiden (oder Carbonaten, Nitraten etc.) erhaltenes Vorprodukt besitzt ungenügende Sinteraktivität. Dies bedingt sehr lange Reaktionszeiten bis phasenreine Supraleiter erhalten werden. So beschreibt Freyhardt et al. (Supercond. Sci. Technol. 3 (1990) 602), daß für die phasenreine Darstellung des 3-Schicht-Materials 600 Stunden notwendig sind.

Die Darstellung von Copräzipitaten für die Herstellung (wismutfreier) Supraleiter des Typs Y-Ba-Cu-O ist wiederholt beschrieben worden (z. B. EP-0 303 249 A2, EP-0 287 064 A3 oder EP-0 313 148 A1, DE-OS-3 930 116).

Die Herstellung eines Bi-Pb-Sr-Ca-Cu enthaltenden Copräzipitats durch Fällung mit wäßriger Oxalsäure-Lösung und die weitere Verarbeitung zu einem Supraleiters ist beschrieben in J. Hagberg et al., Physica C 160 (1989) Seite 369. Die Fällung dauert mehrere Tage und die Ergebnisse sind schwer reproduzierbar.

Es bestand daher die Aufgabe, ein einfaches Verfahren zur Fällung von Copräzipitaten, die sich zu hochtemperatursupraleitenden Metalloxiden weiterverarbeiten lassen, mittels Oxalat anzugeben, das exakt reproduzierbar ist und nach dem sich die gefällten Copräzipitate einfacher, schneller und energiesparender zu den hochtemperatursupraleitenden Verbindungen weiterverarbeiten lassen.

Es wurde nun ein Verfahren zur Herstellung eines Wismut, Kupfer, Strontium und Kalzium enthaltenden Hochtemperatursupraleiters gefunden, wobei man eine wäßrige Lösung mit einem pH-Wert zwischen 0,5 und 4 herstellt, die die Metalle in einem Atomverhältnis enthält, das einem Hochtemperatursupraleiter entspricht, man die Lösung mit einer Oxalsäure-Lösung vereinigt, um die Metalle quantitativ als Oxalat auszufällen, man die gebildeten Oxalate abtrennt, thermisch zu den Oxiden zersetzt und diese bei Temperaturen oberhalb 700 °C zum gewünschten Hochtemperatursupraleiter in Gegenwart von Sauerstoff umsetzt. Das Verfahren ist dadurch gekennzeichnet, daß man die wäßrige Lösung der Metalle soweit konzentriert, bis sich ein Niederschlag abzuscheiden beginnt, man die Oxalsäure als Lösung in einem mit Wasser mischbaren Lösungsmittel einsetzt und man die Oxalate bei 550 - 700 °C in Gegenwart von Sauerstoff zersetzt.

Das angegebene Verfahren eignet sich besonders für Wismut enthaltende Supraleiter der Formel Bi₂(Sr, Ca)₂CuOₓ, Bi₄(Sr, Ca)₅Cu₃Oₓ, Bi₂Sr₂CaCuOₓ und Bi₂Sr₂Ca₂Cu₃Oₓ. In allen Verbindungen kann Wismut bis zu 50 Mol-% durch Blei und/oder Antimon ersetzt sein. Strontium oder Kalzium können partiell durch Y ersetzt werden. Ferner läßt sich das Vorprodukt Bi_{1.8}Pb_{0.4}Sr₂Ca_{2.2}Cu₃Oₓ (zur Herstellung der 3-Schichtverbindung) erzeugen. Auch andere Zusammensetzungen von Vorprodukten sind einstellbar.

Nach der Zersetzung des Oxalatniederschlags und der Entfernung des Restkohlenstoffs bei 550 - 700 °C liegt ein Precursor-Pulver hoher Reaktivität vor, das sich gut (durch weiteres Erhitzen in Gegenwart von Sauerstoff) zu Supraleitern weiterverarbeiten läßt.

Bei einem bevorzugten Verfahren werden im ersten Verfahrensschritt wäßrige Lösungen bekannten Gehaltes von wasserlöslichen Salzen der Elemente Strontium, Kalzium und Kupfer (sowie gegebenenfalls von Blei) vereinigt. Der Gehalt der Lösungen wird durch komplexometrische Titration überprüft. Geeignete wasserlösliche Salze sind z. B. Chloride und insbesondere Nitrate. Der pH-Wert der Lösung muß in diesem Schritt nicht eingestellt werden. Dadurch wird ein Einschleppen von Verunreinigungen, insbesondere von Alkalimetallen, vermieden. Anschließend wird die Lösung so lange aufkonzentriert, z. B. bei Normaldruck eingedampft, bis ein erster Niederschlag undefinierter Zusammensetzung zu erkennen ist. Dieser wird durch Zugabe von destilliertem Wasser gerade wieder aufgelöst.

Danach erfolgt die Zugabe einer Lösung eines leichtlöslichen Wismutsalzes, insbesondere Wismutnitrat. Um undefinierte Wismutniederschläge zu vermeiden, soll der pH-Wert der - nunmehr sämtliche erforderlichen Metalle enthaltenden - Lösung auf 0,5 bis 4, z. B. durch Zusatz von Salpetersäure, eingestellt werden.

Anschließend wird wiederum bis zum Auftreten einer ersten Ausfällung konzentriert und diese mit etwas destilliertem Wasser in Lösung gebracht. Die nunmehr vorliegende Lösung enthält ca. 40 Gew.-% Metallnitrate.

Eine Alternative besteht darin, sämtliche Lösungen der Metallsalze zu vereinen, einen auftretenden Niederschlag mittels konzentrierter Salpetersäure wieder aufzulösen und dann einzudampfen.

Das Aufkonzentrieren verringert bei der nachfolgenden Copräzipitation die vorhandene Wassermenge, so daß die noch vorhandene geringe Löslichkeit der beteiligten Metalloxalate in Wasser keine Rolle mehr spielt.

Anschließend folgt die eigentliche Copräzipitation der Oxalate. Vorteilhafterweise bringt man die konzentrierte wäßrige Metallsalzlösung in möglichst feinverteilter Form in eine Lösung aus Oxalsäure in dem mit Wasser mischbaren Lösungsmittel ein. Sehr gut geeignet ist das Vernebeln der wäßrigen Lösung mittels Ultraschall, wobei die erzeugten Flüssigkeitströpfchen nach unten sinken und in Kontakt gelangen mit der Oberfläche der (gerührten) Oxalsäure-Lösung; aber auch das Eintropfen in eine gerührte Lösung führt zu einem sehr feinkörnigen Niederschlag. Elektronenmikroskopische Aufnahme des so erhaltenen Copräzipitates verbunden mit EDX-Analysen zeigen in beiden Fällen eine sehr gute Homogenität.

Es ist bevorzugt, wenn Oxalsäure im Überschuß eingesetzt wird, insbesondere das 1,1- bis 3-fache besonders bevorzugt das 1,5- bis 3-fache der theoretisch benötigten Menge.

Das verwendete Lösungsmittel muß eine ausreichende Löslichkeit für Oxalsäure aufweisen und die gebildeten Oxalate dürfen sich in ihm kaum lösen. Sehr gut geeignet sind aliphatische Alkohole wie Methanol, Ethanol, Propanol sowie Aceton. Die Menge des Lösungsmittels soll mindestens das 15-fache, insbesondere das 20- bis 40-fache des Volumens der wäßrigen Lösung ausmachen.

Der erhaltene reinweiße Niederschlag kann nach kurzer Rührdauer, beispielsweise 30 Minuten, abgetrennt werden. Er wird anschließend mit kaltem Lösungsmittel gewaschen.

Das gewaschene und getrocknete Oxalatgemisch läßt sich durch mindestens zweistündiges Erhitzen auf Temperaturen zwischen 550 und 700 °C in Gegenwart von Sauerstoff problemlos in ein reaktives Oxidgemisch überführen. Dabei wird zunächst CO₂, z. T. schon bei Temperaturen von 300 bis 550 °C abgespalten. Der noch Kohlenstoff enthaltende Rückstand wird erst durch mehrstündiges Erhitzen in Gegenwart von Sauerstoff (z. B. in Luft) in ein reines Oxidgemisch umgewandelt. Diese Oxidation dauert bei 500 °C etwa 10 h, bei 700 °C etwa 5 h. Die Zersetzung der Oxalate kann durch DTA oder Kontrolle des Gewichtsverlustes überwacht werden.

Das erhaltene Precursorpulver ist so reaktiv, daß es meist bereits geringe Anteile an Supraleitern enthält. Bei Temperaturen von etwa 750 °C entstehen im Falle einer Zusammensetzung, die der 3-Schichtverbindung entspricht, selbst bei kurzen Reaktionszeiten (unter 10 Stunden) größere Anteile der 2-Schichtverbindung. Da sich üblicherweise diese Verbindung nur sehr langsam bildet, zeigt dies die Reaktionsfähigkeit des Oxidgemischs. Das gleiche Oxidgemisch reagiert dagegen bei etwa 845 °C zu reiner 3- Schichtverbindung.

Es zeigte sich, daß der Rest-C-Gehalt der zersetzten Oxalate unmittelbar von der Zersetzungstemperatur abhängig ist. Nach einer Zersetzungsdauer von jeweils 10 h an Luft lagen bei 450 °C noch 3,8 Gew.-% Restkohlenstoff vor, bei 700 °C noch 0,2 Gew.-%. Unter reduziertem Sauerstoffpartialdruck (2 % Sauerstoff / 98 % Stickstoff) kann der Restgehalt an Kohlenstoff bei 700 °C auf 990 ppm gesenkt werden.

Um eine direkte Reaktion der (reaktiven) Ausgangsoxide zum gewünschten Supraleiter zu gewährleisten, soll die Zersetzung der copräzipitierten Oxalate möglichst im Bereich von 300 - 700 °C erfolgen. Das erfindungsgemäße Verfahren liefert nach der Zersetzung der Oxalate sehr reaktive Pulver. Die Reproduzierbarkeit der Zusammensetzung des Precursorpulvers von Ansatz zu Ansatz ist sehr gut.

Entscheidend zur phasenreinen Darstellung von Supraleitern ist die exakte Einstellung der Zusammensetzung des Precursor-Pulvers. Folgende Analysenwerte, erhalten mittels ICP-AES - wurden für verschiedene Einwaagen ermittelt

| | |
|---|---|
| Einwaage | Bi_{1.8}Pb_{0.33}Sr_{1.93}Ca_{1.93}Cu₃Oₓ |
| ICP-AES | Bi_{1.74}Pb_{0.34}Sr_{1.92}Ca_{1.81}Cu₃Oₓ |
| Einwaage | Bi_{1.8}Pb_{0.4}Sr₂Ca_{2.2}Cu₃Oₓ |
| ICP-AES | Bi_{1.75}Pb_{0.42}Sr_{1.97}Ca_{2.13}Cu₃Oₓ |
| Einwaage | Bi₂Sr₂CaCu₂Oₓ |
| ICP-AES | Bi_{1.98}Sr_{1.95}Ca_{1.02}Cu₂Oₓ |

Die Abweichungen von der Idealzusammensetzung sind innerhalb der Meßgenauigkeit der ICP-Analysen.

Die Erfindung wird durch die folgenden Beispiele näher erläutert, ohne auf die konkret dargestellten Ausführungsformen beschränkt zu sein.

### Beispiel 1

Der Gehält wäßriger Lösungen von Pb(NO₃)₂, Sr(NO₃)₂, Ca(NO₃)₂ und Cu(NO₃)₂ wird komplexometrisch bestimmt. Diese Lösungen werden im Verhältnis Pb_{0.33}Sr_{1.93}Ca_{1.93}Cu₃Oₓ zusammengegeben. Die klare Lösung wird bis zu ersten Ausfällung eingedampft. Die Ausfällung wird mit etwas destilliertem Wasser wieder in Lösung gebracht und eine saure Lösung von Bi(NO₃)₃, deren Metallgehalt ebenfalls komplexometrisch bestimmt wurde, wird hinzugegeben. Die Metallsalzgehalte der Lösung entsprechen dem Verhältnis Bi_{1.8}Pb_{0.33}Sr_{1.93}Ca_{1.93}Cu₃Oₓ, Die Lösung wird erneut bis zum Ausfällen eines Niederschlages eingedampft und dieser wieder mit wenig destilliertem Wasser in Lösung gebracht. Die resultierende Lösung mit einem pH-Wert unter 1 wird in eine Lösung des doppelten Äquivalents an Oxalsäure in einer 20fachen Ethanolmenge (bezogen auf die Wassermenge) getropft. Der entstehende Niederschlag wird abfiltriert, mit etwas Ethanol gewaschen und kalziniert. Hierzu werden die Oxalate in Pulverform in 10 h auf 450 °C erhitzt, 10 h bei dieser Temperatur gehalten, in 5 h auf 700 °C erhitzt, dort 10 h gehalten und dann abgekühlt. Das auf diese Weise vorkalzinierte Pulver ist folgendermaßen charakterisiert:
a. Die Zusammensetzung nach ICP-AES Analyse beträgt Bi_{1.8}Pb_{0.33}Sr_{1.93}Ca_{1.93}Cu₃Oₓ.
b. Die mittlere Korngröße beträgt nach einer Sedigraph-Messung d₅₀ = 1.9 »m.
c. Der Rest-Kohlenstoffgehalt beträgt 0,21 %.
d. Röntgenpulveraufnahmen zeigen neben hohen amorphen Anteilen wenig CuO sowie etwas Erdalkaliplumbat.
e. REM-Aufnahmen zeigen gleichmäßige, homogene Körner.

### Beispiel 2

Ein Ansatz der Zusammensetzung Bi_{1.8}Pb_{0.4}Sr₂Ca_{2.2}Cu₃Oₓ wird wie in Beispiel 1 behandelt. Die Zusammensetzung des vorkalzinierten Pulvers beträgt nach ICP-AES Bi_{1.75}Pb_{0.42}Sr_{1.97}Ca_{2.13}Cu₃Oₓ. Die übrigen Kenndaten entsprechen im Rahmen der Meßgenauigkeit dem Ansatz aus Beispiel 1.

### Beispiel 3

Ein Ansatz der Zusammensetzung Bi₂Sr₂CaCu₂Oₓ wird ebenfalls analog Beispiel 1. copräzipitiert und kalziniert. Die weitgehend quantitative Fällung des homogenen und feinkörnigen Pulvers zeigt sich in der ICP-AES Analyse mit dem Wert Bi_{1.98}Sr_{1.95}Ca_{1.02}Cu₂Oₓ.

## Patentansprüche

1. Verfahren zur Herstellung eines Wismut, Kupfer, Strontium und Kalzium enthaltenden Hochtemperatursupraleiters, wobei man eine wäßrige Lösung mit einem pH-Wert zwischen 0,5 und 4 herstellt, die die Metalle in einem Atomverhältnis enthält, das einem Hochtemperatursupraleiter entspricht, man die Lösung mit einer Oxalsäure-Lösung vereinigt, um die Metalle quantitativ als Oxalat auszufällen, man die gebildeten Oxalate abtrennt, thermisch zu den Oxiden zersetzt und diese bei Temperaturen oberhalb 700 °C zum gewünschten Hochtemperatursupraleiter in Gegenwart von Sauerstoff umsetzt, dadurch gekennzeichnet, daß man die wäßrige Lösung der Metalle soweit konzentriert, bis sich ein Niederschlag abzuscheiden beginnt, man die Oxalsäure als Lösung in einem mit Wasser mischbaren organischen Lösungsmittel einsetzt und man die Oxalate bei Temperaturen von 550 bis 700 °C in Gegenwart von Sauerstoff zersetzt.

2. Verfahren nach Anspruch 1, dadurch gekennzeichnet, daß Wismut teilweise durch Blei ersetzt ist.

3. Verfahren nach Anspruch 1, dadurch gekennzeichnet, daß Strontium oder Kalzium teilweise durch Lanthan, ein Element der Lanthaniden oder Yttrium ersetzt ist.

4. Verfahren nach Anspruch 1, dadurch gekennzeichnet, daß das mit Wasser mischbare organische Lösungsmittel Methanol, Ethanol, Propanol oder Aceton ist.

5. Verfahren nach Anspruch 1, dadurch gekennzeichnet, daß spätestens 30 Minuten nach Beendigung des Zusammengebens der Partner das Copräzipitat von der flüssigen Phase abgetrennt wird.

6. Verfahren zur Herstellung eines Wismut, Kupfer, Strontium und Kalzium enthaltenden oxidischen Vorprodukts hoher Reaktivität zur Herstellung eines Hochtemperatursupraleiters, wobei man eine wäßrige Lösung mit einem pH-Wert zwischen 0,5 und 4 herstellt, die die Metalle in einem Atomverhältnis enthält, das einem Hochtemperatursupraleiter entspricht, man die Lösung mit einer Oxalsäure-Lösung vereinigt, um die Metalle quantitativ als Oxalat auszufällen, man die gebildeten Oxalate abtrennt, thermisch zu den Oxiden zersetzt, dadurch gekennzeichnet, daß man die wäßrige Lösung der Metalle soweit konzentriert, bis sich ein Niederschlag abzuscheiden beginnt, man die Oxalsäure als Lösung in einem mit Wasser mischbaren organischen Lösungsmittel einsetzt und man die Oxalate bei Temperaturen von 550 bis 700 °C in Gegenwart von Sauerstoff zersetzt.

7. Verfahren nach Anspruch 6, dadurch gekennzeichnet, daß man die wäßrige Lösung der Metallsalze zu der Oxalsäure-Lösung gibt.

## Claims

1. A process for producing a bismuth-, copper-, strontium- and calcium-containing high-temperature superconductor, in which an aqueous solution is produced which has a pH of 0.5 - 4 and which contains the metals in an atomic ratio corresponding to a high-temperature superconductor, the solution is combined with an oxalic acid solution in order to precipitate the metals quantitatively as oxalate, the oxalates formed are separated off and thermally decomposed to form the oxides, and the latter are reacted in the presence of oxygen at temperatures above 700°C to form the desired high-temperature superconductor, which process comprises concentrating the aqueous solution of the metals until a precipitate begins to deposit, using the oxalic acid as a solution in an organic solvent which is miscible with water and decomposing the oxalates at 550 - 700°C in the presence of oxygen.

2. The process as claimed in claim 1, wherein bismuth is partially replaced by lead.

3. The process as claimed in claim 1, wherein strontium or calcium is partially replaced by lanthanum, a lanthanide element or yttrium.

4. The process as claimed in claim 1, wherein the organic solvent which is miscible with water is methanol, ethanol, propanol or acetone.

5. The process as claimed in claim 1, wherein the coprecipitate is separated off from the liquid phase not more that 30 minutes after completing the combination of the solutions.

6. A process for producing a bismuth-, copper-, strontium- and calcium-containing oxidic precursor of high reactivity to produce a high-temperature superconductor, in which an aqueous solution is produced which has a pH of 0.5 - 4 and which contains the metals in an atomic ratio corresponding to a high-temperature superconductor, the solution is combined with an oxalic acid solution in order to precipitate the metals quantitatively as oxalate, the oxalates formed are separated off and thermally decomposed to form the oxides, which process comprises concentrating the aqueous solution of the metals until a precipitate begins to deposit, using the oxalic acid as a solution in an organic solvent miscible with water and decomposing the oxalates at 550 - 700°C in the presence of oxygen.

7. The process as claimed in claim 6, wherein the aqueous solution of the metal salts is added to the oxalic acid solution.

## Revendications

1. Procédé pour la préparation d'un supraconducteur à hautes températures contenant du bismuth, du cuivre, du strontium et du calcium, en préparant une solution aqueuse ayant une valeur de pH comprise entre 0,5 et 4, qui contient les métaux dans un rapport atomique, qui correspond à un supraconducteur à hautes températures, en réunissant la solution avec une solution d'acide oxalique, afin de précipiter quantitativement les métaux sous forme d'oxalates, en séparant les oxalates formés, en les décomposant thermiquement en les oxydes et en faisant réagir ceux-ci a des températures supérieures à 700 °C pour obtenir le supraconducteur à hautes températures en présence de l'oxygène. Le procédé est caractérisé en ce qu'on concentre la solution aqueuse des métaux jusqu'au début de la séparation d'un dépôt, qu'on utilise l'acide oxalique en tant que solution avec un solvant miscible à l'eau et qu'on décompose les oxalates à des températures de 550 a 700 °C, en présence de l'oxygène.

2. Procédé selon la revendication 1, caractérisé en ce que le bismuth est partiellement remplacé par le plomb.

3. Procédé selon la revendication 1, caractérisé en ce que le strontium ou le calcium sont partiellement remplacés par le lanthane, un élément du groupe des lanthanides ou l'yttrium.

4. Procédé selon la revendication 1, caractérisé en ce que le solvant organique miscible à l'eau est le méthanol, l'éthanol, le propanol ou l'acétone.

5. Procédé selon la revendication 1, caractérisé en ce qu'au plus 30 minutes avant la fin de la réunion des partenaires on sépare le coprécipité de la phase liquide.

6. Procédé pour la préparation d'un précurseur oxydé contenant du bismuth, du cuivre, du strontium et du calcium, très réactif, pour la préparation d'un supraconducteur à hautes températures, en préparant une solution aqueuse ayant une valeur de pH comprise entre 0,5 et 4, qui contient les métaux dans un rapport atomique correspondant à un supraconducteur à hautes températures, en réunissant la solution avec une solution d'acide oxalique, en vue de précipiter quantitativement les métaux sous forme d'oxalates, en séparant les oxalates formés, en décomposant thermiquement en les oxydes, caractérisé en ce qu'on concentre la solution aqueuse des métaux jusqu'au début de la séparation d'un dépôt, qu'on utilise l'acide oxalique en tant que solution dans un solvant organique miscible à l'eau et qu'on décompose les oxalates à des températures de 550 à 700 °C, en présence de l'oxygène.

7. Procédé selon la revendication 6, caractérisé en ce qu'on ajoute la solution aqueuse des sels de métaux à la solution d'acide oxalique.
